# EUROPEAN PATENT SPECIFICATION

(11) **EP 2 870 842 B1**
(45) Date of publication and mention of the grant of the patent: **08.06.2016**
(21) Application number: 14165559.7
(22) Date of filing: 23.04.2014
(51) Int. Cl.: A01B 59/00

(54) **Tractor implement hitch links**
Traktorwerkzeuganbauverbindungen
Attaches de crochet à outils pour tracteur

(30) Priority: 03.10.2013 GB 201317491
(43) Date of publication of application: 13.05.2015
(73) Proprietor: AGCO International GmbH, 8212 Neuhausen am Rheinfall (CH)
(72) Inventor: Kapfer, Johannes, 87616 Marktoberdorf (DE)
(74) Representative: AGCO Intellectual Property Department

(56) References cited:
- EP-A1- 2 130 420
- EP-A1- 2 140 748
- US-A- 3 420 550

## Description

This invention relates to tractors and other agricultural vehicles having implement hitches in which each of a pair of lower links are pivotally mounted on a tractor chassis (or other structural element) and each link typically has a lifting rod connected with a hitch actuator or raising cylinder which is used to pivot the lower link relative to the tractor chassis and hence raise and lower any implement connected with the lower links. The invention further relates to a lower link as used in such an implement hitch.

Such hitches are standard at the rear of agricultural and industrial tractors and it is also well known to have a towing hitch mounted on the rear of such a tractor at a location between the lower links for the attachment of a trailer or implement via a drawbar. Problems can arise with such installations as the lower links can impede the ability of any drawbar mounted on the towing hitch to pivot relative to the rear of the tractor thus restricting the turning capability of the tractor and trailer.

One arrangement intended to mitigate the problem is described in European patent EP-B-2130420 which provides a means to shorten the lifting rods such that the lower links may be raised to a higher than conventional level and thus be clear of a drawbar and hitch. Such a configuration may involve extra cost in terms of components and may still not give sufficient clearance for a drawbar in all circumstances, especially where the towing hitch is mounted such as to be variable in height relative to the vehicle chassis.

Improved drawbar clearance may be achieved if the lower links are completely demounted from the vehicle, but this is a labour-intensive task which risks damaging the mounting points and bolts for the links if performed repeatedly. An arrangement using a pair of removable links (joined as a unitary link assembly and mounted to the front of a tractor) is described in European patent application EP-A-2140748. Here again, however, it is preferred to pivot the unitary link assembly out of the way when not required, rather than demounting it.

It is an object of the present invention to provide a link for an implement hitch and an agricultural vehicle employing the same) which at least mitigates the above problem by enabling the tractor or vehicle operator to simply demount the lower links in order to clear the drawbar.

Thus in accordance with the present invention there is provided a lower link for an implement hitch of an agricultural vehicle, the link comprising an elongate body having first and second mechanical connectors at opposite ends thereof, wherein the first connector is configured for attachment to an implement and the second connector is configured for pivotally attaching the link to a chassis or other structural component of an agricultural vehicle, wherein each connector is a coupling hook. Suitably, each of the first and second connectors includes manually releasable locking means which may be engaged to prevent the detachment of a connector from implement or vehicle, such that a link may simply be disconnected by the vehicle user disengaging the second connector.

In an embodiment described below, the first and second coupling hook connectors are identical, with both ends of the link carrying the same form of quick-release connector (such as a spring-loaded retaining catch) which reduces the number of different component types or configurations in the arrangement.

By way of an additional safety measure, a lower link as above wherein the second connector may be detachable from a chassis or other structural component of an agricultural vehicle only when placed into a specific orientation with respect to the said chassis or other structural component of an agricultural vehicle. In such an arrangement, to reduce the chances of a user accidentally disconnecting a link, the link may have a first range of pivoting movement relative to the chassis or other structural component of an agricultural vehicle when In operation with an implement attached, and a second range larger than the first when an implement is not attached, and the second connector is then only detachable with the link in the second but not first range. With this limitation, the second connector may be configured with one or more fixed projections which cooperate with the point of attachment of the link to a vehicle to prevent detachment when the link is in the first range of positions.

Also in accordance with the present invention there is provided a tractor or other agricultural vehicle including an implement hitch having a pair of lower links as described above.

Further features of the present invention are recited in the attached subclaims, to which reference should now be made and the disclosure of which is incorporated herein by reference, or will become apparent from the description of exemplary embodiments below.

Embodiments of the present invention will now be described, by way of example only and with reference to the accompanying drawings in which:
Figures 1 to 3 are a series of perspective views of components of a tractor rear axle and implement hitch showing one of the hitch links in attached, partially demounted, and fully demounted positions respectively; and

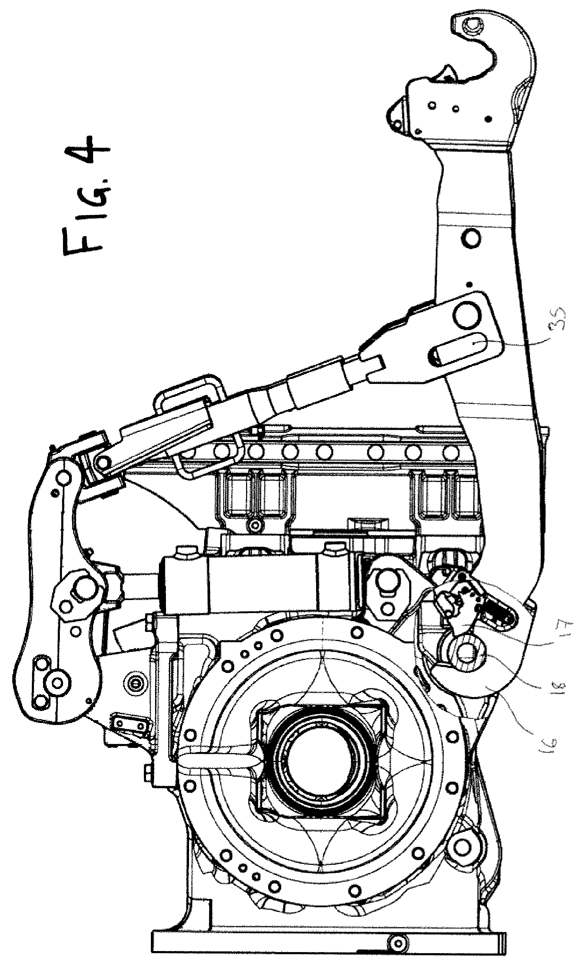

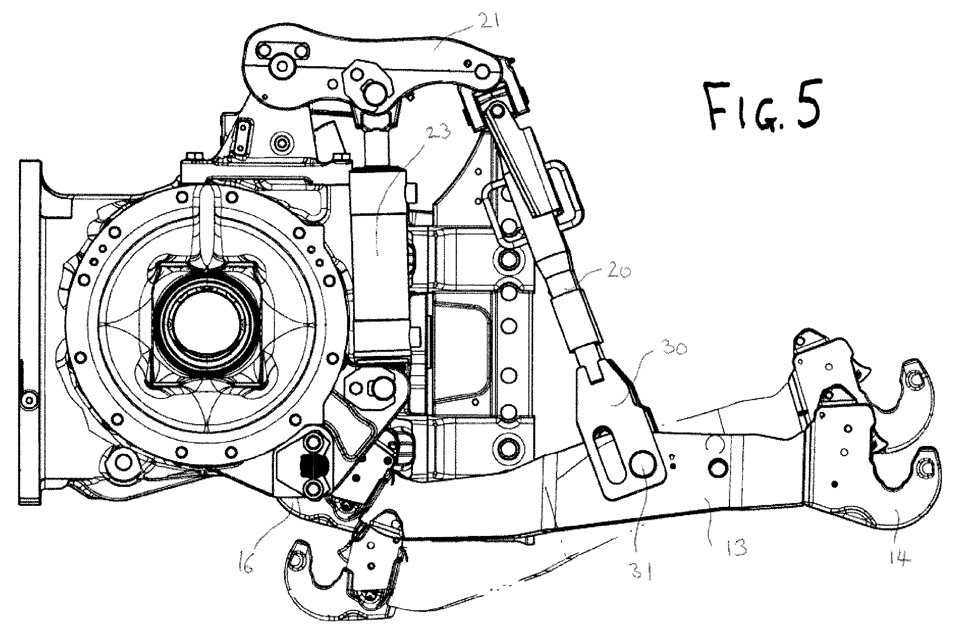

Figures 4 and 5 are side elevational views of the rear axle of Figure 1 with one of the hitches in attached and partially demounted positions respectively.

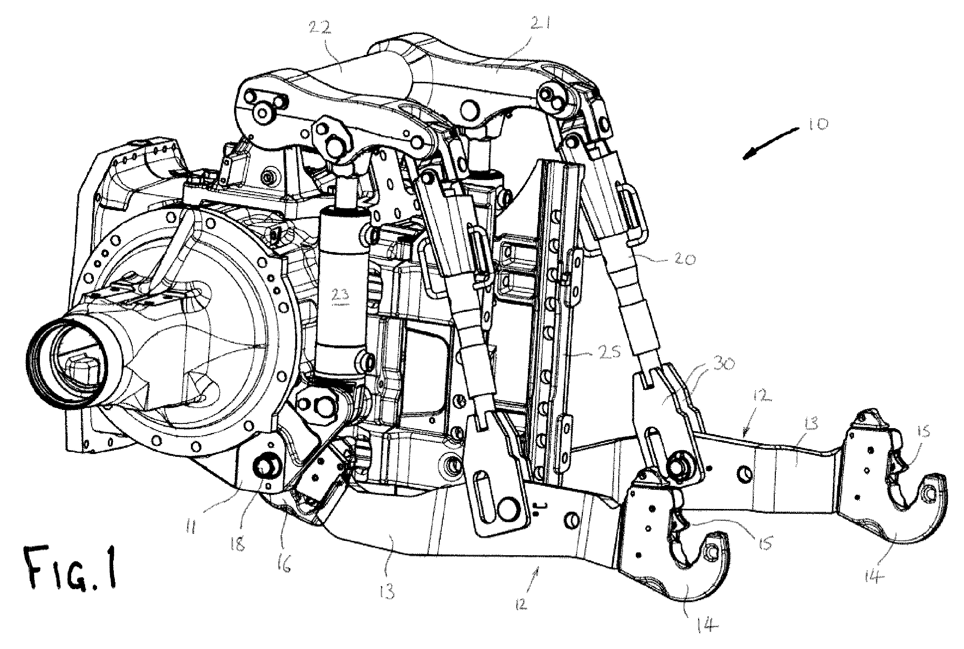

Referring to the drawings, Figure 1 shows part of a three point hitch 10 mounted on the rear of a tractor chassis 11 in the vicinity of the rear axle housing. The hitch has two lower links 12, each of which are pivotally mounted on the tractor chassis 11. Each lower link 12 comprises an elongate body 13 and has at its outer end a coupling hook 14 which is provided with the conventional spring loaded latch 15, and a similar or identical coupling hook 16 with latch 17 at its inner end. The inner coupling hooks 16 engage respective transverse bars 18 attached to the chassis 11 and extending parallel to the axis of rotation of the rear axle, such that each of the links 12 is able to pivot about the axis of its respective bar 18 in a plane perpendicular to the axis of the rear axle.

In conventional manner, each lower link 12 is raised and lowered relative to the chassis 11 by lift rods 20 which are pivotally connected with lift arms 21 which are in turn mounted on the chassis by a cross shaft 22. The lift arms 21 are rotated with cross shaft 22 by one or more hitch actuators 23 which act between the lift arms 21 and the tractor chassis 11. The three point hitch 10 is completed by a so-called "top-link" (not shown) which is again pivotally mounted on the tractor chassis 11.

Figure 1 shows the lower links 12 in a generally horizontal operational position. A towing hitch (not shown) is mounted in a conventional manner on vertical rails 25 located between links 12. As can be seen from Figure 1, a trailer drawbar connected with a hitch mounted on the rails 25 may interfere with the links 12 thus restricting the turning of an associated trailer.

The lower end of each lift rod 20 comprises a pair of plates 30 mounted in a parallel spaced apart arrangement, with a spacing such as to permit the elongate body 13 of a lower link 12 to be received between the plates. A manually releasable bolt 31 passes through a pair of aligned holes 32 in the plates 30 and a further hole 33 in the elongate body 13, such as to provide a pivoting connection between the lift rods 20 and respective lower links 12.

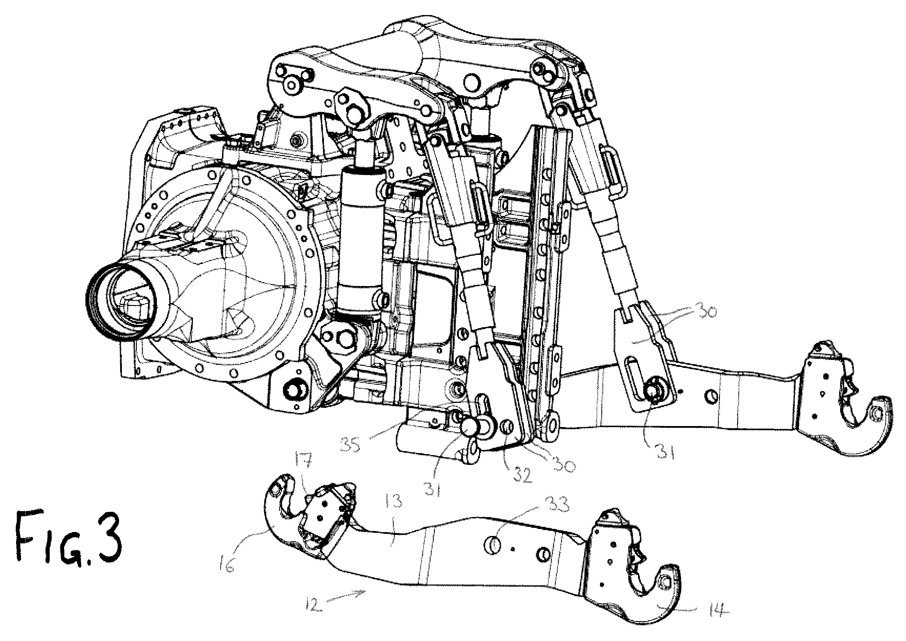

As shown in Figure 3, the plates 30 may additionally be provided with aligned slots 35 through which the bolt 31 may pass (in addition to passing through hole 33) such as to permit limited translational motion of the lower link 12 relative to the lift rod 20. Such an arrangement is required when an implement carried by the three point hitch is required to be able to rise and fall relative to the vehicle, to an extent determined by the length of the slot 35, in response to variations in the terrain.

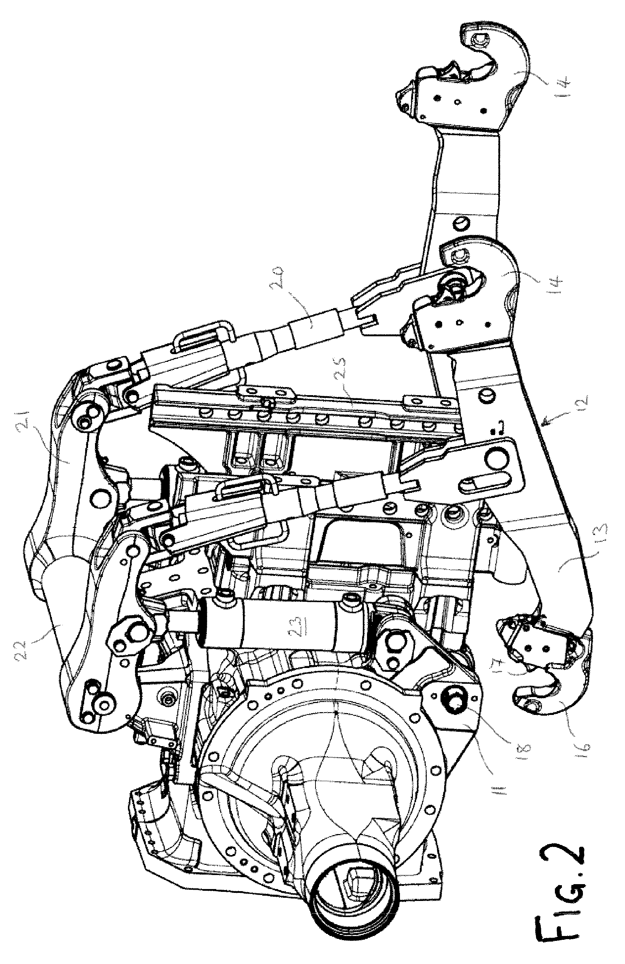

As shown by the sequence of Figures 1 to 3, when it is desired to attach an implement to a towing hitch carried by the rails 25, it is a simple matter for a user of the vehicle to demount the lower links 12 to avoid them causing an obstruction to a drawbar of the implement. From the fully mounted position of Figure 1, the spring-loaded latch 17 of the inner coupling hook 16 is released, allowing the inner hook 16 to swing clear of the transverse bar 18, as shown in Figure 2. The bolt 31 is then removed to allow the elongate body 13 of the link to disengage from the plates 30 of lift rod 20 to complete the demounting operation, as shown by Figure 3.

The inner hook 16 may be identical to the outer hook 14 (for the reduction in component count in the manufacture of the link) or it may be of a modified form. Where inner and outer hooks are identical, both may have their open portions upwards, as in the illustrated examples, or one or both may have the open portion downwards. For an example of modified form, as mentioned previously, by way of an additional safety measure the inner hook 16 may be detachable from the transverse bar 18 attached to the chassis 11 only when the link 12 placed into a specific orientation with respect to the chassis. Such specific orientation may for example be a position of rotation about the bar 18 that would not be attained by the link 12 in normal operation, to reduce the chances of a user or operating incident accidentally disconnecting a link. The inner hook 16 may be configured with one or more fixed projections (not shown) which cooperate with the point of attachment of the link to the vehicle chassis 11 to prevent detachment when the link is in a first conventional operating range of positions.

## Claims

1. A lower link (12) for an implement hitch (10) of an agricultural vehicle, the link comprising an elongate body (13) having first (14) and second (16) mechanical connectors at opposite ends thereof, wherein the first connector (14) is configured for attachment to an implement and the second connector (16) is configured for pivotally attaching the link (12) to a chassis (11) or other structural component of an agricultural vehicle, **characterised in that** each connector is a coupling hook.

2. A lower link as claimed in claim 1, wherein the first and second connectors (14, 16) each include manually releasable locking means (15, 17) which may be engaged to prevent the detachment of a connector from implement or vehicle.

3. A lower link as claimed in claim 1 or claim 2, wherein the first and second connectors (14, 16) are identical.

4. A lower link as claimed in any of claims 1 to 3, wherein the second connector (16) is detachable from a chassis (11) or other structural component of an agricultural vehicle only when placed into a specific orientation with respect to the said chassis or other structural component of an agricultural vehicle.

5. A lower link as claimed in claim 4, wherein the link (12) has a first range of pivoting movement relative to the chassis (11) or other structural component of an agricultural vehicle when in operation with an implement attached, and has a second range larger than the first when an implement is not attached, and the second connector (16) is only detachable with the link in the second but not first range.

6. A lower link as claimed in claim 5, wherein the second connector (16) is configured with one or more fixed projections which cooperate with the point of attachment of the link to a vehicle to prevent detachment when the link is in the first range of positions.

7. A lower link as claimed in any preceding claim, wherein each coupling hook has a spring-loaded catch (15, 17).

8. A lower link as claimed in any preceding claim, having a coupling point (33) along the elongate body (13) between the connectors, by means of which coupling point the link may be pivotally coupled to the lower end of a lifting rod (20) of an implement hitch.

9. A lower link as claimed in claim 8, wherein the coupling point (33) includes an aperture through the elongate body, the link further comprising a manually removable pin (31) by the use of which through the aperture the pivotal coupling between lifting rod and link may be effected.

10. A tractor or other agricultural vehicle, including an implement hitch having a pair of lower links as claimed in any preceding claim.

## Patentansprüche

1. Unterlenker (12) für eine Arbeitsgerätkupplung (10) eines landwirtschaftlichen Fahrzeugs, wobei der Lenker einen langgestreckten Körper (13) mit einem ersten (14) und einem zweiten (16) mechanischen Verbinder an dessen entgegengesetzten Enden aufweist, wobei der erste Verbinder (14) für eine Befestigung an einem Arbeitsgerät konfiguriert ist und der zweite Verbinder (16) für eine schwenkbare Verbindung des Lenkers (12) an einem Chassis (11) oder einem anderen strukturellen Bauteil eines landwirtschaftlichen Fahrzeugs konfiguriert ist, **dadurch gekennzeichnet, dass** jeder Verbinder ein Kupplungshaken ist.

2. Unterlenker nach Anspruch 1, wobei der erste und der zweite Verbinder (14, 16) jeweils ein manuell lösbares Arretiermittel (15, 17) aufweist, in das eingegriffen werden kann, um das Lösen eines Verbinders von dem Arbeitsgerät oder Fahrzeug zu verhindern.

3. Unterlenker nach Anspruch 1 oder 2, wobei der erste und der zweite Verbinder (14, 16) identisch sind.

4. Unterlenker nach einem der Ansprüche 1 bis 3, wobei der zweite Verbinder (16) von einem Chassis (11) oder einem anderen strukturellen Bauteil eines landwirtschaftlichen Fahrzeugs nur dann lösbar ist, wenn er sich in einer speziellen Ausrichtung relativ zu dem Chassis oder dem anderen strukturellen Bauteil eines landwirtschaftlichen Fahrzeugs befindet.

5. Unterlenker nach Anspruch 4, wobei der Lenker (12) einen ersten Schwenkbereich relativ zu dem Chassis (11) oder dem anderen strukturellen Bauteil eines landwirtschaftlichen Fahrzeugs besitzt, wenn er mit einem damit verbundenen Arbeitsgerät betrieben wird, und der Lenker (12) einen zweiten Bereich, der größer als der erste Bereich ist, besitzt, wenn kein Arbeitsgerät befestigt ist, und der zweite Verbinder (16) nur lösbar ist, wenn sich der Lenker in dem zweiten und nicht in dem ersten Bereich befindet.

6. Unterlenker nach Anspruch 5, wobei der zweite Verbinder (16) mit einem oder mehreren feststehenden Vorsprüngen versehen ist, die mit dem Verbindungspunkt des Lenkers an einem Fahrzeug zusammenarbeiten, um ein Lösen des Lenkers in dem ersten Positionsbereich zu verhindern.

7. Unterlenker nach einem der vorgehenden Ansprüche, wobei jeder Kupplungshaken eine federbelastete Raste (15, 17) aufweist.

8. Unterlenker nach einem der vorgehenden Ansprüche, mit einem Kupplungspunkt (33) entlang des langgestreckten Körpers (13) zwischen den Verbindern, wobei der Oberlenker durch den Kupplungspunkt schwenkbar mit dem unteren Ende einer Hubstange (20) einer Arbeitsgerätkupplung verbunden sein kann.

9. Unterlenker nach Anspruch 8, wobei der Kupplungspunkt (33) eine Öffnung in dem langgestreckten Körper aufweist, wobei der Lenker weiterhin einen manuell entfernbaren Stift (31) aufweist, wobei durch dessen Benutzung durch die Öffnung hindurch die schwenkbare Verbindung zwischen der Hubstange und dem Lenker hervorgerufen werden kann.

10. Traktor oder anderes landwirtschaftliches Fahrzeug, mit einer Arbeitsgerätkupplung mit einem Paar von Unterlenkern nach einem der vorhergehenden Ansprüche.

## Revendications

1. Biellette inférieure (12) pour un crochet d'attelage d'outillage (10) d'un véhicule agricole, la biellette comprenant un corps allongé (13) comportant un premier (14) et un second (16) coupleurs mécaniques à ses extrémités opposées, dans laquelle le premier coupleur (14) est configuré de manière à être fixé sur un outillage et le second coupleur (16) est configuré de manière à fixer la biellette (12) avec liberté de pivotement sur un châssis (11) ou autre composant structurel d'un véhicule agricole, **caractérisée en ce que** chaque coupleur est un crochet de couplage.

2. Biellette inférieure selon la revendication 1, dans laquelle les premier et second coupleurs (14, 16) comportent chacun des moyens de verrouillage (15, 17) qui peuvent être déverrouillés manuellement et couplés de manière à empêcher la séparation d'un coupleur de l'outillage ou du véhicule.

3. Biellette inférieure selon la revendication 1 ou 2, dans laquelle les premier et second coupleurs (14, 16) sont identiques.

4. Biellette inférieure selon l'une quelconque des revendications 1 à 3, dans laquelle le second coupleur (16) peut être séparé d'un châssis (11) ou autre composant structurel d'un véhicule agricole uniquement lorsqu'il est placé suivant une orientation spécifique par rapport audit châssis ou tout autre composant structurel d'un véhicule agricole.

5. Biellette inférieure selon la revendication 4, dans laquelle la biellette (12) présente une première plage de mouvement de pivotement par rapport au châssis (11) ou autre composant structurel d'un véhicule agricole lorsqu'il est utilisé couplé à un outillage, et présente une seconde plage plus importante que la première, lorsqu'un outillage n'est pas couplé, et le second coupleur (16) peut être uniquement séparé avec la biellette dans la seconde plage mais pas dans la première.

6. Biellette inférieure selon la revendication 5, dans laquelle le second coupleur (16) est configuré avec une ou plusieurs saillies fixes qui coopèrent avec le point de fixation de la biellette sur un véhicule afin d'empêcher la séparation lorsque la biellette est dans la première plage de positions.

7. Biellette inférieure selon l'une quelconque des revendications précédentes, dans laquelle chaque crochet de couplage comporte un élément de saisie chargé par ressort (15, 17).

8. Biellette inférieure selon l'une quelconque des revendications précédentes, comportant un point de couplage (33) le long du corps allongé (13) entre les coupleurs, un point de couplage au moyen duquel la liaison peut être couplée avec liberté de pivotement sur l'extrémité inférieure d'une barre de levage (20) d'un crochet d'attelage d'outillage.

9. Biellette inférieure selon la revendication 8, dans laquelle le point de couplage (33) comporte une ouverture à travers le corps allongé, la biellette comprenant en outre une broche pouvant être retirée manuellement (31), laquelle en l'utilisant à travers l'ouverture, permet d'assurer le couplage pivotant entre la barre de levage et la biellette.

10. Tracteur ou autre véhicule agricole, comportant un crochet d'attelage d'outillage comprenant une paire de biellettes inférieures selon l'une quelconque des revendications précédentes.
